# EUROPEAN PATENT SPECIFICATION

(11) **EP 3 026 190 B1**
(45) Date of publication and mention of the grant of the patent: **20.02.2019**
(21) Application number: 15196288.3
(22) Date of filing: 25.11.2015
(51) Int. Cl.: E04D 13/03, G02B 19/00

(54) **TUBULAR SKYLIGHT**
RÖHRENFÖRMIGES OBERLICHT
LUCARNE TUBULAIRE

(30) Priority: 28.11.2014 DK 201470747
(43) Date of publication of application: 01.06.2016
(73) Proprietor: VKR Holding A/S, 2970 Hørsholm (DK)
(72) Inventor: KRISTENSEN, Kristian Nitzsch, 8464 Galten (DK)
(74) Representative: Guardian IP Consulting I/S

(56) References cited:
- WO-A1-2011/004278
- WO-A1-2011/071945
- AU-A1- 2007 200 481
- US-A- 4 833 838
- US-A1- 2007 035 841

## Description

The current invention relates to a tubular skylight comprising;
- a roof mounted element, for collecting exterior light,
- a ceiling mounted element,
- a tube, said tube connecting the roof mounted element and the ceiling mounted element, and
- a diffuser element, for distributing the exterior light in a room.

### Description of related art

The applicant of the present application manufactures tubular skylights of the type described in the preface above.

The tubular skylight of said type provides natural light to the interior of a building by capturing daylight in the roof mounted element and bringing the light through the tube and into the room through the diffuser element.
The diffuser element is translucent. The translucent diffuser element achieves two effects:
1. It diffuses the light when it enters the room.
2. It hides the internal structural details of the tubular skylight from normal viewing angles of a person in the room..

These types of skylights have diffuser elements that are flush or close to flush with the ceiling. Moreover the diffuser element is typically planar.

WO 2011/071945 discloses a tubular skylight according to the preamble of claim 1.

One object of the present invention is to increase the amount of natural light that enters the room through the tubular skylight

### Summary of the invention

According to the present invention, this is achieved by a tubular skylight having the features of claim 1.

In the present application the term "translucent" is the physical property of allowing light to pass through a material. The photons of the light may or may not be scattered at the two interfaces of the material or internally. The less translucent a material the more the light is scattered and the more translucent a material the scattering of the light is less.
In the present application the term "transparent" is a sub-set of translucence. Transparent is the physical property of allowing light to pass through a material without being scattered, i.e. it not only allows transport of light but also image formation through the material.
In the present application the term "central axis" is an axis defined by the centres of all cross-sections through an element in planes parallel to the ceiling where the tubular skylight is installed.

With the present invention it is achieved that the appearance of the light exiting through the side of the diffuser appears different to the light exiting through the bottom of the diffuser.
In one embodiment the means configured for affecting the luminance of the light exiting the diffuser is configured such that the luminance of the light exiting through the light path zone has a higher luminance than the light exciting through the bottom portion.

With this embodiment it is achieved that the light path zone will appear brighter than the bottom portion.

The means configured for affecting the luminance of the light exiting the diffuser could be achieved with a light path zone that is more translucent than the bottom portion.

With this embodiment it is achieved that the amount of natural light that enters the room increases. This is because the light path zone with a higher translucency adds to the natural light supplied through the bottom portion.

Moreover, the effect of the more translucent light path zone on the sidewall portion causes the side of the diffuser to appear as if it is "glowing" when subject to sufficient exterior light.

This particular effect is caused by the difference in translucence between the light path zone and the bottom portion that is less translucent than the light path zone. Therefore the amount of diffusion is less through the light path zone than through the bottom portion.

In an embodiment the means configured for affecting the luminance of the light exiting the diffuser is a light source near the light path zone.

In an embodiment the means configured for affecting the luminance of the light exiting the diffuser is a prism.

The roof mounted element comprises a roof adapter and a window element, for example a window pane. The roof adapter is mounted in the roof of a building and serves to secure the window element and one end of the tube in position.

The ceiling mounted element comprises a ceiling ring to be mounted in the ceiling structure of the building.

The ceiling ring is preferably circular or square. In alternative embodiments the ceiling ring could be elliptical, oval or polygonal or any combination thereof.

The ceiling ring is an adapter in which the diffuser element and the lower end of the tube is installed and securely held in position.

The tube is positioned between the roof mounted element and the ceiling mounted element. The internal surface of the tube is preferably made of a reflective material.

The diffuser element serves to distribute the exterior light in a room. The diffuser element diffuses the light when it enters the room from the tubular skylight.

The diffuser element comprises the first diffuser pane with a bottom portion and a sidewall portion.

The bottom portion is substantially planar.

In the present application the term "planar" describes an element having a width-to-height ratio of more than 6. In certain cases, the term planar could refer to an element having a width-to-height ratio of more than 10, of more than 15 or of more than 20. For a non-circular element the circumscribed circle defines the width of the element. Examples of non-circular elements are elliptic, triangular, square, pentagonal, hexagonal, heptagonal, octagonal, nonagonal and decagonal.

When the diffuser element is installed in the tubular skylight, the bottom portion is substantially parallel with the ceiling. In installations where the ceiling is horizontal the bottom portion could be substantially horizontal as well.

The sidewall portion is substantially parallel to the central axis through the diffuser element.

The bottom portion and the sidewall portion adjoin along a transition line. The transition line is located on the external surface of the first diffuser pane. The transition line marks the transition from the bottom portion to the sidewall portion of the diffuser pane.
In an embodiment the transition line is a closed two dimensional figure contained in a plane normal to the central axis through the diffuser element.
In an embodiment the external surface of the bottom portion and the external surface of the sidewall portion have different angles at their junction at the transition line. In this embodiment the external surface will appear to have an edge at the transition line. The transition line could be clearly visible.

In an embodiment the external surface of the bottom portion and the external surface of the sidewall portion have equal angles at their junction at the transition line. In this embodiment the transition line could be invisible and the external surface of the diffuser element could be smooth.
The sidewall portion has a light path zone.
In an embodiment the light path zone covers the entire sidewall portion.

In an embodiment the light path zone covers part of the sidewall portion.
The diffuser element and the ceiling mounted element is configured such that light may escape through the light path zone and enter the room. For that purpose a free space is located adjacent the light path zone providing a light path free of obstacles between the light path zone and the room.
The size and shape of the free space is governed by the actual installation and a trade off between providing unfiltered light but at the same time restricting the visibility of the internal structure of the tubular skylight.
Light enters the tubular skylight through the roof mounted element and travels through the tube to the diffuser where it exits the tubular skylight partly through the bottom portion and partly through the light path zone.

In an embodiment of the tubular skylight the diffuser element has shape selected among the following: circular, elliptical, oval and polygonal or a combination of the aforementioned shapes. Examples of polygonal shapes that could be selected are triangular, square, pentagonal, hexagonal, heptagonal, octagonal, nonagonal and decagonal.

An embodiment of the tubular skylight according to the invention is further distinguished in that the light path zone is transparent.

With this embodiment it is achieved to increase further the amount of natural light that is provided to the room. The light that enters the room through the light path zone will be unfiltered.

When the sun is shining outside the light rays that enter through the light path zone will appear as unfiltered sunlight.

Moreover, the effect of the glowing side of the diffuser is more pronounced.

With the method according to the invention it is achieved that the translucent effect in the bottom portion is achieved in a way that would require no extra steps as soon as the mould is finished.

The level of translucency is determined by the surface texture. It is possible to select the translucency by applying a certain surface texture.

In an alternative embodiment the translucency is applied by applying a translucent foil on either the internal or external surface of the bottom portion.

An embodiment of the tubular skylight according to the invention is further distinguished in that the sidewall portion extends into the ceiling mounted element.

An embodiment of the tubular skylight according to the invention is further distinguished in that the sidewall has a substantially planar cross section in a plane extending radially from the central axis.
An embodiment of the tubular skylight according to the invention is further distinguished in that the sidewall portion is inclined between 25° to -10° in relation to the central axis.
In the present application the sidewall portion, in a horizontally oriented diffuser element with the outside surface of the diffuser element facing downwards, has a positive inclination when the central axis and the sidewall have a vertex located below the diffuser element.
Correspondingly the sidewall portion has a negative inclination where the centerline and the sidewall portion have a vertex located above the diffuser element.

The tubular skylight according to the invention comprises a reflector, wherein the reflector has a reflective surface facing the light path zone, and wherein the reflective surface is arranged with an acute angle in relation to the central axis and with a vertex above the bottom portion.
The reflector reflects the light exiting the light path zone. Light rays that are directed horizontal or near horizontal changes direction to a vertical or near vertical direction because of the acute angle.
The reflector is arranged adjacent the light path zone leaving room for the free space adjacent the light path zone. The free space ensures that there is a passage for the light between the light path zone and the room.

In an embodiment the reflector is a ring with a shape corresponding to the sidewall.
An embodiment of the tubular skylight according to the invention is further distinguished in that the diffuser element comprise a second diffuser pane and a spacer element to space the second diffuser pane from the first diffuser pane and provide a closed air space between the first and second diffuser panes.
This prevents debris and insects from building up on the internal surface of the first diffuser pane.
Moreover, the heat transfer coefficient of the diffuser element is improved.
In an embodiment the second diffuser pane is translucent.

This embodiment prevents debris and insects on the second diffuser pane from being visible from the room below. However, it also absorbs some light.
In an embodiment the second diffuser pane is transparent.

In this embodiment debris and insects could be vaguely visible through the first diffuser pane from the room below. However, the light absorbed by the second diffuser pane is insignificant.

The diffuser element of the tubular skylight according to the invention comprises a ledge, wherein the ledge is protruding from the sidewall portion, and wherein the light path zone is arranged between the ledge and the bottom portion.
The ledge provides a simple means of covering and thereby hiding mounting means for securing the ceiling ring and/or the reflector, if applicable, to the ceiling.
An embodiment of the tubular skylight according to the invention is further distinguished in that the diffuser element is circular, that an external thread is formed on the sidewall portion and that a cooperating internal thread is formed in the ceiling mounted element.
It is herewith achieved that the diffuser element is easy to install and remove.

In an embodiment the ceiling ring and the diffuser element has co-operating sealing means, for providing sealing between the ceiling ring and diffuser element, when the diffuser element is inserted axially into the ceiling ring.
In its simples embodiment the sealing means comprise an O-ring located on an upward facing surface on the diffuser element or a downwards facing surface on the ceiling ring. When the diffuser element is inserted axially in the ceiling ring the sealing means abuts a surface on the opposite element.
Other examples of suitable sealing means are selected among sealing strips having open or closed cross sections.
The thread provides a means of achieving a uniform sealing pressure.

Furthermore, a separate embodiment, which is not part of the claimed invention, has been found in a tubular skylight comprising;
- a roof mounted element, for collecting exterior light,
- a ceiling mounted element,
- a tube, said tube connecting the roof mounted element and the ceiling mounted element, and
- a diffuser element, for distributing the exterior light in a room, wherein the diffuser element is mounted in the ceiling mounted element, wherein the diffuser element comprises a first diffuser pane with a bottom portion and a sidewall portion, wherein the sidewall portion is substantially parallel to a central axis through the diffuser element, wherein the diffuser element comprises a ledge, and wherein the ledge is protruding from the sidewall portion.
The ledge provides a simple means of covering and thereby hiding mounting means for securing the ceiling ring and/or the reflector, if applicable, to the ceiling.

Thus, a separate embodiment, which is not part of the claimed invention, has been found in a diffuser element for mounting in a tubular skylight, said tubular skylight comprising;
- a roof mounted element, for collecting exterior light,
- a ceiling mounted element,
- a tube, said tube connecting the roof mounted element and the ceiling mounted element, and
- a diffuser element, for distributing the exterior light in a room, wherein the diffuser element is mounted in the ceiling mounted element, wherein the diffuser element comprises a first diffuser pane with a bottom portion and a sidewall portion, wherein the sidewall portion is substantially parallel to a central axis through the diffuser element, wherein the diffuser element comprises a ledge and wherein the ledge is protruding from the sidewall portion.

Moreover, a separate embodiment, which is not part of the claimed invention, has been found in a tubular skylight comprising;
- a roof mounted element, for collecting exterior light,
- a ceiling mounted element,
- a tube, said tube connecting the roof mounted element and the ceiling mounted element, and
- a diffuser element, for distributing the exterior light in a room, wherein the diffuser element is mounted in the ceiling mounted element, wherein the diffuser element comprises a first diffuser pane with a bottom portion and a sidewall portion, wherein the sidewall portion is substantially parallel to a central axis through the diffuser element, wherein the diffuser element is circular, wherein an external thread is formed on the sidewall portion and wherein a cooperating internal thread is formed in the ceiling mounted element.
It is herewith achieved that the diffuser element is easy to install and remove.
In an embodiment the ceiling ring and the diffuser element have co-operating sealing means, for providing sealing between the ceiling ring and diffuser element, when the diffuser element is inserted axially into the ceiling ring.
In its simplest embodiment the sealing means comprise an O-ring located on an upward facing surface on the diffuser element or a downwards facing surface on the ceiling ring. When the diffuser element is inserted axially in the ceiling ring the sealing means abuts a surface on the opposite element.

Other examples of suitable sealing means are selected among sealing strips having open or closed cross sections.
The thread provides a means of achieving a uniform sealing pressure.

Thus, a separate embodiment, which is not part of the claimed invention, has been found in a diffuser element for mounting in a tubular skylight, said tubular skylight comprising;
- a roof mounted element, for collecting exterior light,
- a ceiling mounted element,
- a tube, said tube connecting the roof mounted element and the ceiling mounted element, and
- a diffuser element, for distributing the exterior light in a room, wherein the diffuser element is mounted in the ceiling mounted element, wherein the diffuser element comprises a first diffuser pane with a bottom portion and a sidewall portion, wherein the sidewall portion is substantially parallel to a central axis through the diffuser element, wherein the diffuser element is circular, wherein an external thread is formed on the sidewall portion and wherein a cooperating internal thread is formed in the ceiling mounted element.

It should be emphasized that the term "comprises/comprising/comprised of" when used in this specification is taken to specify the presence of stated features, integers, steps or components but does not preclude the presence or addition of one or more other features, integers, steps, components or groups thereof.

### Brief description of the drawings

The invention will be explained in more detail below with reference to the accompanying figures, where:
- Fig. 1: schematically illustrates a tubular skylight according to invention,
- fig. 2: shows a three dimensional view of the tubular skylight of fig. 1,
- fig. 3: shows an exploded view of the tubular skylight of fig. 1,
- fig. 4: shows a ceiling ring,
- fig. 5: shows a diffuser element,
- fig. 6: shows an exploded view of the diffuser element of fig. 5,
- fig. 7: shows a top view of the ceiling ring,
- fig. 8: shows an accessory suitable for mounting in the tubular skylight of fig. 1,
- fig. 9: shows an exploded view of the accessory of fig. 7,
- fig. 10: is a section view of the tubular skylight near the ceiling mounted element,
- fig. 11: shows detail A of fig. 10,
- fig. 12: shows detail B of fig. 11,
- fig. 13: shows a view located at detail A of fig. 10 in a second embodiment of the invention,
- fig. 14: shows a view located at detail A of fig. 10 in a third embodiment of the invention,
- fig. 15: shows a schematic view of the accessory in an embodiment installed in the ceiling mounted element or the tube,
- fig. 16: shows a schematic view of the accessory in an embodiment having a removal means,
- fig. 17: shows a side view of a second embodiment of the diffuser element, and
- fig. 18: shows a side view of a third embodiment of the diffuser element.

It should be emphasized that the embodiments shown are used for example purposes only and should not be used to limit the scope of the invention.

### Detailed description of the embodiments

In the explanation of the figures, identical or corresponding elements will be provided with the same reference numerals in different figures. Therefore, no explanation of all details will be given in connection with each single figure/embodiment.

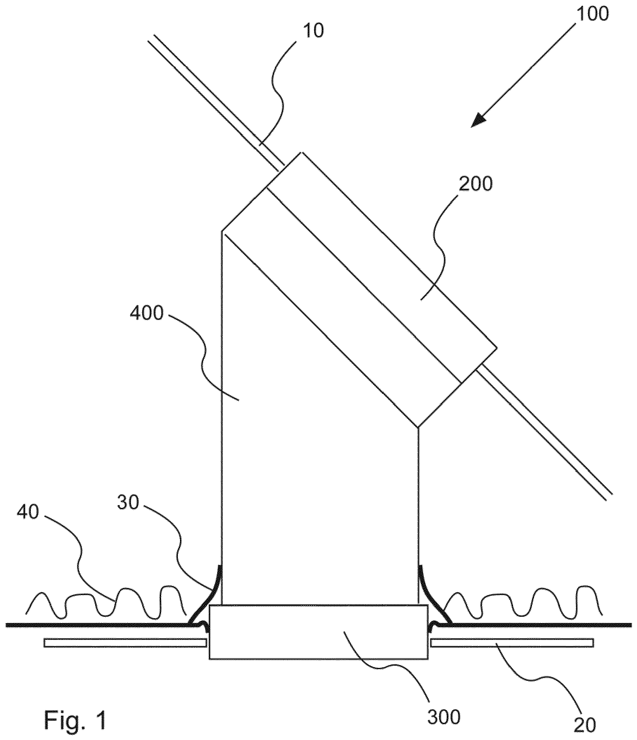

Fig. 1 illustrates a tubular skylight 100. The tubular skylight 100 comprises a roof mounted element 200, a ceiling mounted element 300 and a tube 400 connecting the roof mounted element 200 and the ceiling mounted element 300.

The roof mounted element 200 is attached to the roof structure 10 of a building and the ceiling mounted element 300 is attached to the ceiling structure 20 of a room (not shown) in the building in which the tubular skylight 100 is installed. The skilled person will be able to choose among many methods of connecting the individual elements and the respective structure.

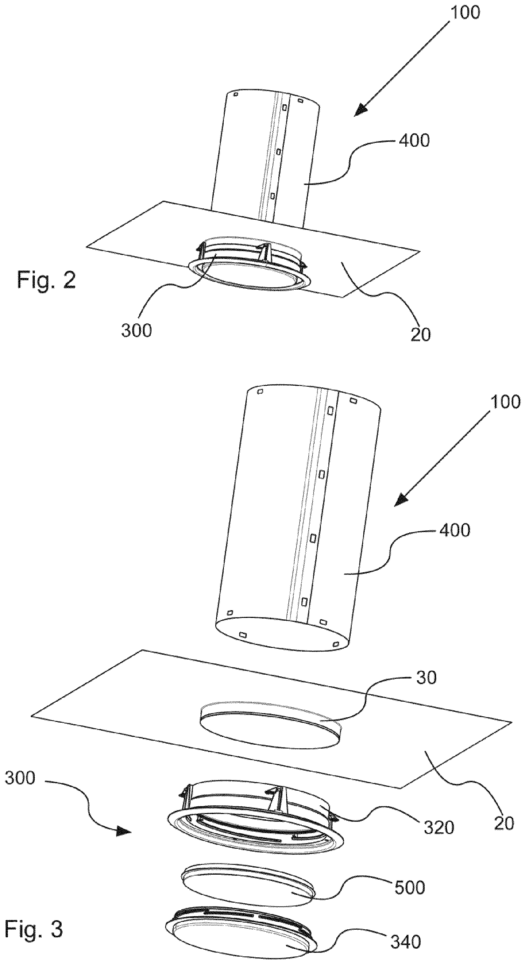

Light enters the tubular skylight 100 through the roof mounted element 200 through a window pane (not shown). The light continues through the tube 400 and exits the tubular skylight 100 through the ceiling mounted element 300 that is equipped with a diffuser element 340, see fig. 2, 3, 5 and 6. Hereafter the light enters the room below the ceiling 20.

The building vapour barrier in the ceiling structure is penetrated by the tubular skylight 100. In order to retain the vapour barrier effect a vapour barrier 30 is attached to the tube 400 and to the building vapour barrier such that the vapour barrier remains unbroken even after the installation of the tubular skylight 100.

In the embodiment shown the vapour barrier 30 is also attached to the ceiling mounted element 300.

In alternative embodiments (not shown) the vapour barrier 30 may be attached only to the ceiling mounted element 300 or only to the tube 400.

The vapour barrier 30 may be completely or partly covered with a layer of insulating material 40.

Fig. 2 and 3 shows the tubular skylight 100 of fig. 1 in a three dimensional view and an exploded view, respectively. More specifically, fig. 2 and 3 shows the tube 400 and the ceiling mounted element 300 with its main constituents.

The ceiling mounted element 300 comprises a ceiling ring 320 and a diffuser element 340.

In the embodiment shown the ceiling mounted element further comprises an accessory 500.

The ceiling ring 320 is attached to the ceiling structure 20. The tube 400 is positioned such that it is coaxial with the ceiling ring 320. The tube 400 is secured to the ceiling ring 320 by a press fit into a recess in the ceiling ring 320.

Alternatively, suitable attachment means may be, for example; screws, nuts and bolts, rivets, hose clamps, snap hooks, wedges or a wedge ring etc.

The diffuser element 340 is removably attached to the ceiling ring 320. The diffuser element 340 serves to diffuse the light entering the room from the tubular skylight 100.

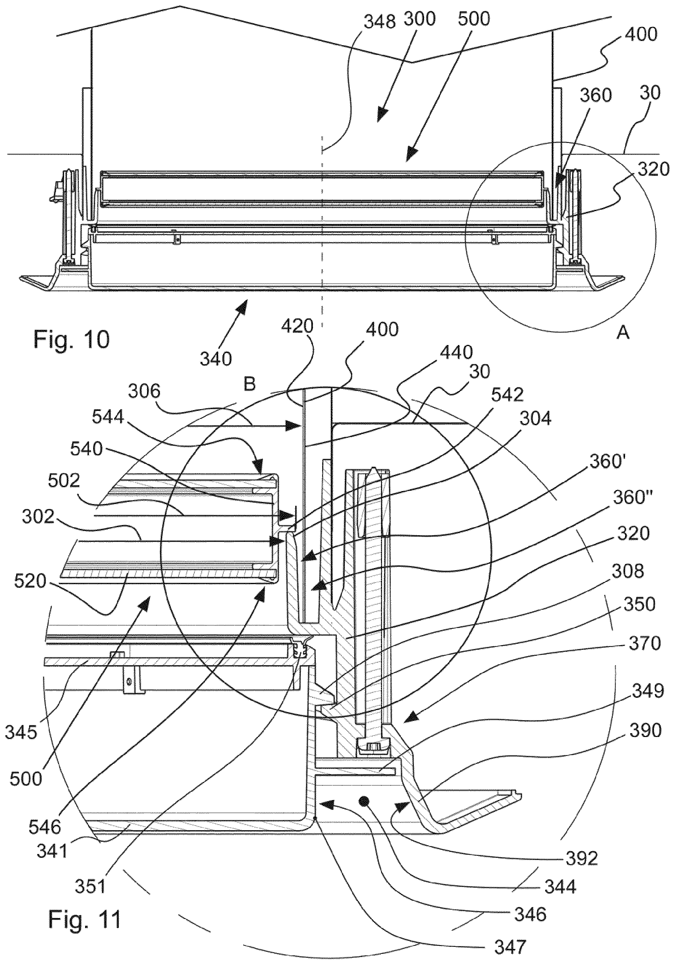

In the present embodiment the accessory 500 is installed in the ceiling mounted element 300, more specifically the ceiling ring 320, see fig. 10.

For example the accessory 500 may be;
- a thermal insulator, for decreasing the U-value of the tubular skylight 100,
- a filter, for affecting the properties of the light entering the diffuser element 340,
- a lamp, for providing light when it is dark outside the building or for adding to the light entering through the tubular skylight 100, or
- any other type of accessory suitable for use in a tubular skylight 100.

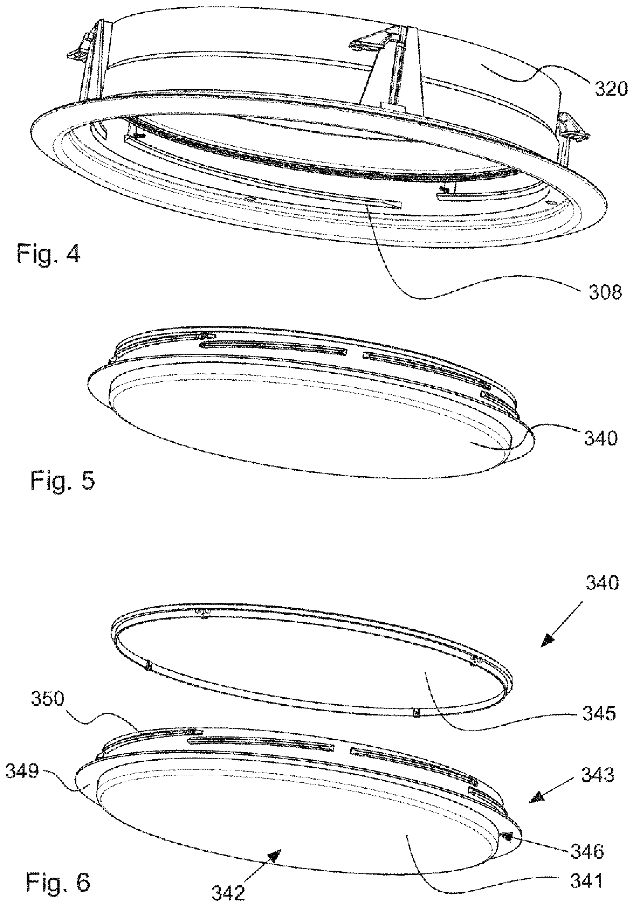

Fig. 4 shows a ceiling ring 320 and fig. 5 shows a diffuser element 340 that is removably attachable to the ceiling ring 320.

Fig. 6 shows an exploded view of the diffuser element 340 of fig. 5.

The diffuser element 340 comprises a first diffuser pane 341 and a second diffuser pane 345.

The first diffuser pane 341 comprises a bottom portion 342 and a sidewall portion 343.

In the embodiment shown, the bottom portion 342 is planar, i.e. the width-to-height ratio is infinite.

In alternative embodiments the bottom portion could be curved with a width-to-height ratio as low as 6.

The bottom portion 342 is translucent

The sidewall portion 343 and the bottom portion 342 adjoin along a transition line 347, see fig. 11. The transition line 347 is located on the external surface of the first diffuser pane 341 where the bottom portion 342 and the sidewall portion 343 intersect. In the embodiment shown the external surfaces of the bottom portion 342 and the sidewall portion 343 have equal angles at their junction at the transition line 347. Therefore the transition line 347 is an imaginary line.

In alternative embodiments the transition line 347 could be sharp or chamfered.

The sidewall portion 343 is substantially parallel with the central axis 348 through the diffuser, see fig. 10.

The sidewall portion 343 has a light path zone 346. The light path zone 346 is more translucent than the bottom portion 342.

In an embodiment the entire sidewall portion 343 is transparent.

The translucency is not illustrated on the figures.

To provide enhanced light outside the bottom portion 342, the light path zone 346 in the current embodiment may be clear or transparent. In other embodiments, the light path zone 346 may be engraved, or the light path zone 346 may have engraved dots or lines, or the diffuser material may, in the light path zone 346, contain light refractive or diffusing particles.

The second diffuser pane 345 is mounted on top of the first diffuser pane 341. In the embodiment shown, the sidewall portion 343 doubles as a spacer element. The spacer element provides a distance between the first diffuser pane 341 and the second diffuser pane 345. Thus, a closed air space is provided between the first and second diffuser pane 341, 345.

A ledge 349 is protruding from the sidewall portion 343. The ledge 349 is located above the light path zone 346, so that it does not obstruct the light coming through the light path zone 346.

The sidewall portion 343 and the ledge 349 form a circular step at the periphery of the diffuser bottom portion 342.

In the embodiment shown the diffuser element 340 is circular. An external thread 350 is formed on the sidewall portion 343. The thread 350 is positioned above the ledge 349. A cooperating internal thread 308 is formed in the ceiling ring 320, see fig 4.

In one example the diffuser sidewall portion 343, the bottom portion 342, the light path zone 346 and the ledge 349 and the thread 350 is translucent. However, this does not exclude other opaque components.

The diffuser element 340 can be installed into the ceiling ring 320 by aligning the threads 308, 350 and turning the diffuser element 340 clockwise or counter clockwise dependent on the properties of the threads 308, 350.

The diffuser element is further detailed in fig. 11.

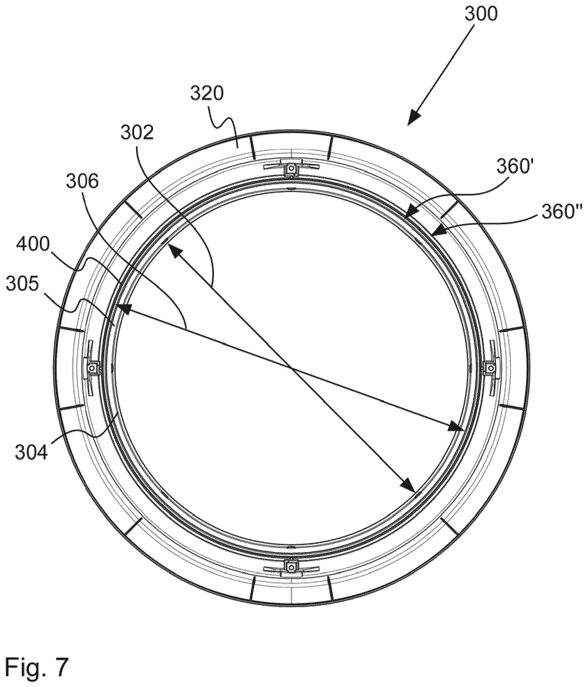

Fig. 7 shows a top view of the ceiling mounted element 300.

The ceiling mounted element 300 comprises a ceiling ring 320 in which the diffuser element 340 is installed, see fig. 2 and 3.

The ceiling mounted element 300 has a bore and the tube 400 has a bore, see fig. 11. The ceiling mounted element 300 has the smaller bore of the two therefore the first inscribed diameter 302 in the present embodiment is located where the bore of the ceiling mounted element 300 is smallest.

A shelf 304 is arranged in the ceiling mounted element for supporting the accessory 500 when it is installed in the tubular skylight 100, see fig. 3.

The shelf 304 has a support surface 305. The maximum area available for the support surface 305 is bounded by the first inscribed diameter 302 and the second inscribed diameter 306. In the embodiment shown the second inscribed diameter 306 has a maximum value equal to the inner diameter of the tube 400.

The first inscribed diameter 302 and the second inscribed diameter 306 is also shown in fig. 11.

In the embodiment shown in fig. 7 the support surface 305 terminates before the tube 400 leaving a free space available for the first condensate collector 360'.

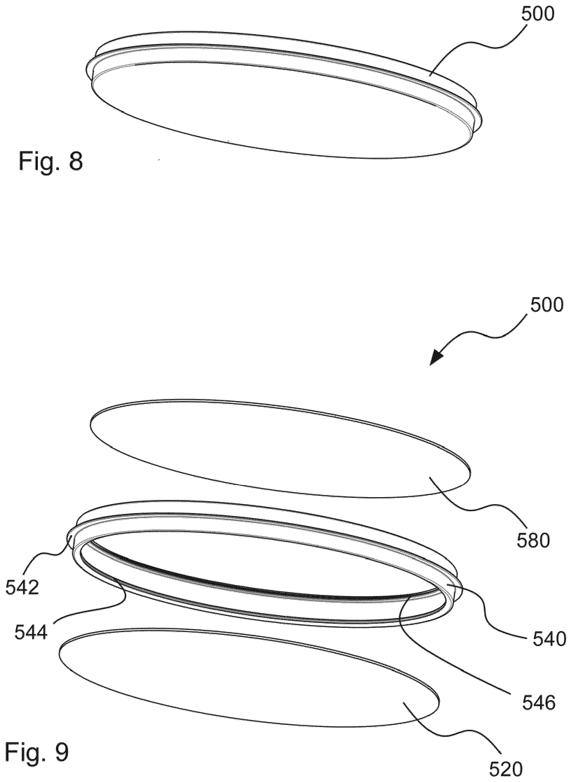

Fig. 8 shows an accessory 500 suitable for mounting in the tubular skylight 100 of fig. 1. Fig. 9 shows an exploded view of the accessory 500 of fig. 8.

In the embodiment shown, the accessory 500 comprises a first element 520 a holding means 540 and an additional element 580. In the embodiment shown each of the first element 520 and the additional element 580 is a rigid disc shaped element.

Alternatively the fist element 520 and/or the additional element 580 could be a ring.

The holding means 540 comprise a resilient element 542 in the form of a flange protruding from the periphery of the accessory 500.

The holding means 540 comprises a first retaining means 544 that retains the first element 520 and an additional retaining means 546 that retains the additional element 546 upon insertion of said first and additional elements 520, 580 into the holding means 540. The first element 520 and the additional element 546 is separated by an interspace. See fig. 11 for more details.

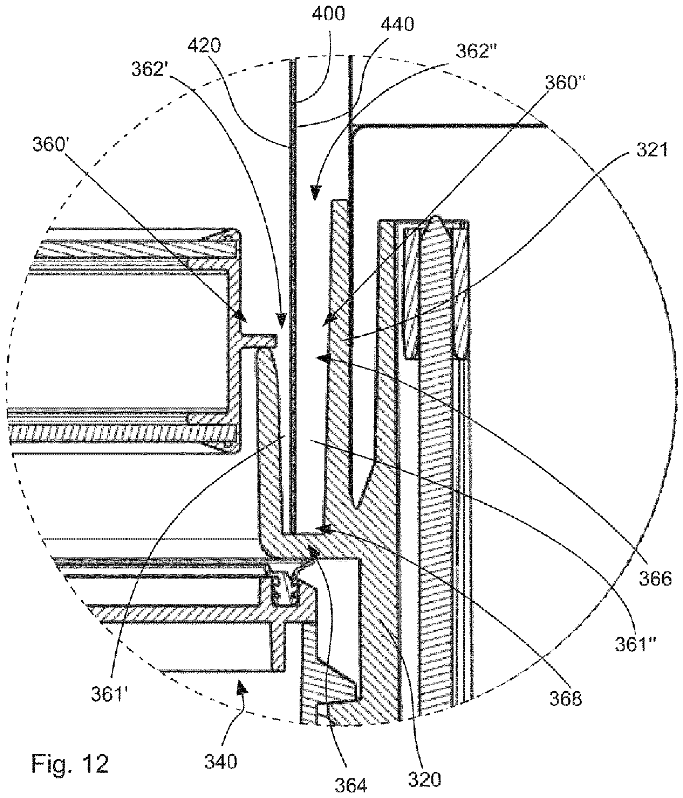

Fig. 10 is a section view of the tubular skylight 100 near the ceiling mounted element, fig. 11 shows detail A of fig. 10 and fig. 12 shows detail B of fig. 11.

Condensate develops on the internal surface 420 of the tube 400 when the internal surface 420 has a temperature below the dew point of the air inside the tube 400. The condensate may eventually form droplets that run down the internal surface 420 of the tube 400.

The tubular skylight 100 comprises a first condensate collector 360' for collecting the condensate running down the internal surface 420 of the tube 400 and a second condensate collector 360" for collecting condensate running down the external surface 440 of the tube 400.

The first condensate collector 360' has a first receptacle 361' for storing condensate and a first inlet 362' to said the first receptacle 361'. Said first inlet 362' is in communication with the internal surface 420 of the tube 400, so that condensate running down the internal surface 420 of the tube is collected by the first condensate collector 360'.

The first inlet 362' is located in a position upstream of the diffuser element 340 such that the condensate running down the internal surface 420 of the tube 400 enters the first condensate collector 360' before it enters the diffuser element 340.

The second condensate collector 360" comprises a second receptacle 361" for storing condensate and a second inlet 362" to said second receptacle 361". Said second inlet 362" is in communication with the external surface 440 of the tube 400.

Therefore condensate running down the external surface 440 of the tube 400 is collected in the second condensate collector 360".

Condensate running down the external surface 440 of the tube is therefore prevented from entering the diffuser element 340 or entering the ceiling structure.

The first and second condensate collector 360', 360" is established by a groove 364 formed in the ceiling ring 320. The tube 400 extends into the groove 364 and divides the groove 364 into two separate elements constituting the first and second condensate collector 360', 360"

The groove 364 has an upper end 366 in a higher position closer to the roof mounted element 200 than its lower end 368 that is in a lower position closer to the ceiling mounted element 300.

From fig. 12 it appears that the first and second inlets 362', 362" to the first and second condensate collectors 360', 360", respectively, are located at the upper end 366 of the groove 364.

The groove 364 has a tapered cross section. The upper end 366 is wider than the lower end 368 and therefore has a greater surface area.

The groove 364 is formed with a combination of a polygonal and substantially V-shaped cross section. One leg of the V is longer than the other, namely the leg that, together with the tube, forms the second condensate collector 360".

In alternative embodiments the cross section may be U-shaped (not shown).

In the embodiment shown in fig. 9, 10 and 11 the groove 364 is closed at its lower end 368. Therefore the groove 364 forms a reservoir for condensate. The condensate collected in each condensate collector 360', 360" will evaporate when the temperature and moisture conditions in the environment in the vicinity of the tubular skylight 100 so allows. Therefore the level of condensate in the condensate collectors 360', 360" will vary over time.

Based on the environment that the tubular skylight 100 will be subject to, the skilled person will be able to size the groove 364 and the respective condensate collectors 360', 360", such that it will be capable to hold the necessary amount of condensate.

The tube 400 extends into the groove 364. The tube 400 is supported on the bottom of the groove 364. The tube end does not seal tightly against the bottom of the groove 364. Therefore the first and second receptacle 361', 361" are fluidly connected. The condensate level in each receptacle 361', 361" is therefore substantially even.

The groove 364 is an annular groove that is formed in the ceiling mounted element 300, more specifically in the ceiling ring 320, see fig. 7.

In the embodiment shown the accessory 500 is installed in the ceiling mounted element 300.

The ceiling mounted element 300 comprises a shelf 304. The shelf 304 has a support surface 305, see fig. 7. The accessory 500 is resting on the support surface 305.

The support surface 305 is bounded on one side by the first inscribed diameter 302. The support surface 305 terminates before the tube 400 leaving a free space available for the first condensate collector 360', more specifically the first inlet 362', see fig. 12.

The flange of the resilient element 542 is protruding from the holding means 540 in its relaxed state. The circumscribed diameter 502 of the accessory 500 including the resilient element 542 is larger than the first inscribed diameter 302. Therefore the resilient element 542 in its relaxed state overlaps the support surface 305, such that accessory is supported on the shelf 304.

During insertion of the accessory 500 into the ceiling mounted element 300 the resilient element 542 is compressed as is passes through the ceiling ring 320 because the ceiling ring 320 has a first inscribed diameter 302 that is smaller than the circumscribed diameter 502 of the accessory 500. As the accessory 500 is inserted further the resilient element 542 becomes free of the ceiling ring 320. The resilient element 542 expands to its larger relaxed state. The accessory can then be lowered until it rests on the shelf 304.

The first and additional retaining means 544, 546 each comprises two flanges that grip the respective first and additional elements 520, 546.

The holding means 540 is annular.

Alternatively the holding means 540 could comprise a plurality of discrete protrusions that protrude radially at the periphery of the holding means 540.

In fig. 10, 11 and 12, the diffuser element 340 is installed into the ceiling ring 320.

The diameter of the sidewall 343 substantially matches the diameter of the tube 400.

A light passage from the light path zone 346 to the room is provided in the form of a free space 344 adjacent the light path zone 346. The free space 346 is outlined by the sidewall portion 343, the ledge 349 and the ceiling ring 320.

In one example the outline of the free space 344 in a plane extending radially from the central axis 348 is substantially square, rectangular or having a polygonal shape. In one other example the outline of the free space 344 in a plane extending radially from the central axis 348 is substantially square and has a height which corresponds to the height of the sidewall light path zone 346.

A reflector 390 is integrated into the ceiling ring 320. The reflector 390 has a reflective surface 392 facing the light path zone 346 at an acute angle in relation to the central axis 348, see fig. 10. Part of the light rays exiting the light path zone 346 strikes the reflective surface 392 of the reflector 390 and is directed towards the room.

The reflector 390 may for example have a white reflective surface 392 which provides good reflection properties.
In embodiments with a reflector 390, the free space 344 is outlined by the sidewall portion 343, the ledge 349, the reflector 390 and in some cases also the ceiling ring 320. The leg of the outline defined by the reflector 390 will have an acute angle in relation to the central axis 348, see fig. 10.

In fig. 11 it can be seen how the ledge 349 covers and thereby hides the installation accessories 370.

Installation accessories 370 may be for example; a fastener clamp as shown operated by a fastener or it may be a hole with a screw secured into the ceiling.

The ledge 349 functions similar to a trim ring. The ledge 349 forms a ring extending radially from the side wall portion 343 across the installation accessory 370 to the ceiling ring reflector 390. The ledge 349 thereby extends substantially across the free space 344.

The second diffuser pane 345 is equipped with a seal 351 that seals against a sealing surface on the ceiling ring 320 when the diffuser element 300 is fully inserted into the ceiling ring 320.

In one example the free space 344 allows access for a user to grasp the diffuser element at the light path zone 346, where after the diffuser element 340 can easily be installed and also later removed with fingers by the end user. Preferably, this is enabled by fastening means where rotation secures the diffuser element 340, such as a thread or matching teeth and slots. Easy removal and installation of the diffuser element 340 enables the end user to clean or upgrade the product with additional accessories 500, for example a light filter or a lamp.

The general shape of the bottom portion 342 and sidewall portion 343 and the ledge 349 of the current embodiment enables the diffuser element 340 to be unitary and injection moulded.

In one alternative, the bottom portion 342 and the ledge 349 may be in the same plane (not illustrated). In this alternative the light path zone 346 would be above the ledge 349.

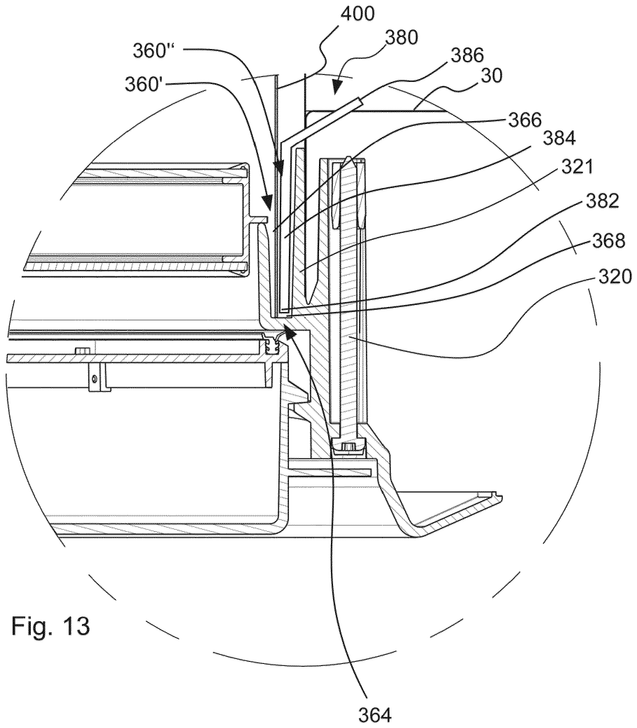

Fig. 13 shows detail A of fig. 10 in a second embodiment of the invention where the first and second condensate collectors 360', 360" comprise a drain 380 for removing condensate from the condensate collectors 360', 360".

The drain 380 comprises a drain pipe 384. The drain pipe 384 extends into the groove 364 at one end and through the vapour barrier 30 at the other end. The drain pipe 384 has a drain inlet 382 at the lower end 368 of the groove 364 and a drain outlet 386 on outside the vapour barrier 30.

The drain outlet 386 is in communication with a discharge. In the embodiment shown the condensate is discharged through evaporation to the surroundings.

In alternative embodiments the discharge is a pump or a heated evaporator.

As the first and second condensate collectors 360', 360" are fluidly connected the drain pipe 384 will remove condensate from both condensate collectors 360', 360".

In alternative embodiments where the first and second condensate collectors 360', 360" are separated two drain pipes may be required.

The ceiling ring 320 has an attachment collar 321 for the vapour barrier 30. The attachment collar 321 is composed by the exterior wall of the second condensate collector 360". The exterior wall of the second condensate collector 360" is spaced from the installation accessory 370. So there is a recess between the installation accessory 370 and the exterior wall forming the attachment collar 321 where the vapour barrier 30 is inserted and fixed.

The vapour barrier 30 may also be fixed to the tube 400. In one example the vapour barrier 30 cross section is T or Y shaped so that one portion can be fixed to the tube 400 and another portion can be fixed to the attachment collar 321 and the third portion can extend across the ceiling 20.

With this arrangement the attachment of the vapour barrier 30 to the ceiling mounted element 300 can be performed in an easy manner. The attachment collar 321 is very accessible because it can be arranged such that no other component is obstructing the direct access to it. Moreover, the height of the attachment collar 321 can be increased to further improve the accessibility. In addition, in cases with a large ceiling thickness, large installation accessories are needed. By separating the installation accessories and the attachment collar by a recess, it is not necessary to extend the attachment collar up past the end of the installation accessories. In this way, a material reduction for the manufacture of the ceiling ring can be achieved.

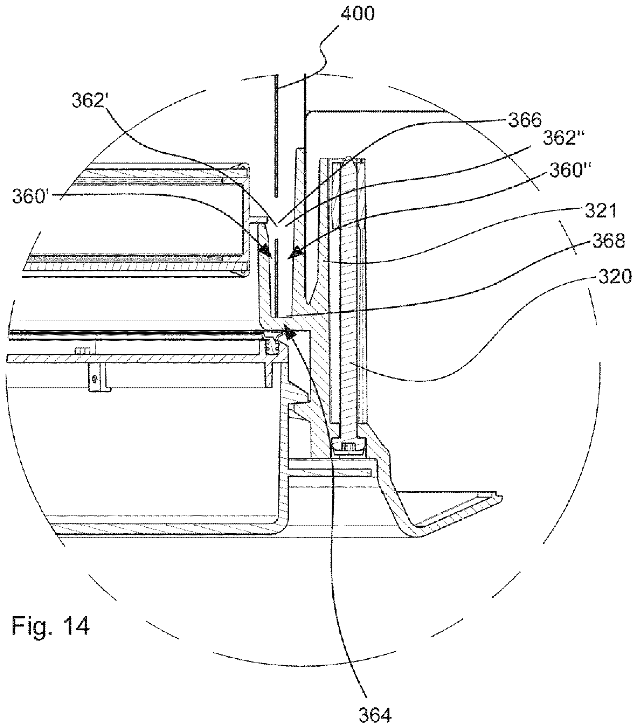

Fig. 14 shows detail A of fig. 10 in a third embodiment of the invention.

In this embodiment the tube 400 terminates above the first and second condensate collector 360', 360". The first and second inlets 362', 362" are the same.

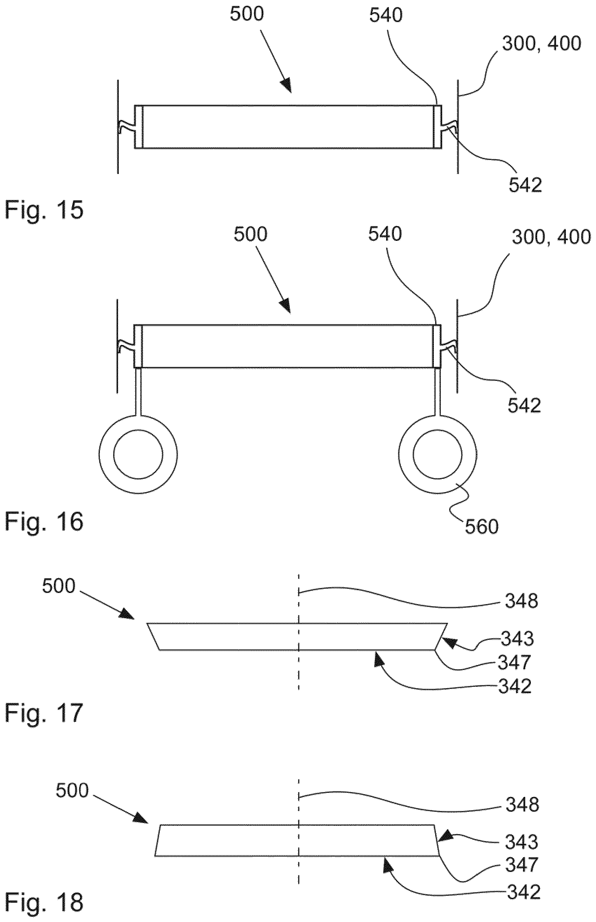

Fig. 15 shows a schematic view of the accessory 500 in an embodiment installed in the ceiling mounted element 300 or the tube 400.

The holding means 540 has a resilient element 542. When inserted into the ceiling mounted element 300 or the tube 400 the resilient element 542 is deformed and therefore applies a normal force on the inner surface of the bore of the ceiling mounted element 300 or the tube 400. The accessory 540 is thereby retained via friction between the resilient element 542 and the ceiling mounted element 300 or the tube 400 respectively.

Fig. 16 shows a schematic view of the accessory 500 in an embodiment having removal means 560 in the form of handles.

When it is required to remove the accessory 500 a user can grip the handles and pull the accessory from the ceiling mounted element 300 or the tube 400.

Fig. 17 shows a side view of a second embodiment of the diffuser element 340. In this embodiment the sidewall portion 343 is inclined 25° in relation to the central axis 348.

Fig. 18 shows a side view of a third embodiment of the diffuser element 340. In this embodiment the sidewall portion 343 is inclined -10° in relation to the central axis 348.

It is to be noted that the figures and the above description have shown the example embodiments in a simple and schematic manner. Specific mechanical details have in many cases not been shown since the person skilled in the art should be familiar with these details and they would just unnecessarily complicate this description.

## Claims

1. A tubular skylight (100) comprising;
- a roof mounted element (200), for collecting exterior light,
- a ceiling mounted element (300),
- a tube (400) connecting the roof mounted element (200) and the ceiling mounted element (300), and
- a diffuser element (340), for distributing the exterior light in a room, wherein the diffuser element (340) is mounted in the ceiling mounted element (300), wherein the diffuser element (340) comprises a first diffuser pane (341) with a translucent bottom portion (342) and a sidewall portion (343) with a translucent light path zone (346), wherein the tubular skylight (100) has means configured for affecting the luminance of the light exiting the diffuser such that the luminance of the light exiting through the light path zone (346) has a different luminance than the light exiting through the bottom portion (342), wherein the bottom portion (342) is substantially planar having a width-to-height ratio of more than 6, wherein the bottom portion (342) adjoins the sidewall portion (343) at a transition line (347), wherein the sidewall portion (343) is substantially parallel to a central axis (348) through the diffuser element (340), wherein the ceiling mounted element (300) and the diffuser element (340) are configured for providing a light passage from the light path zone (346) to the room in the form of a free space (344) adjacent the light path zone (346), wherein the tubular skylight (100) comprises a reflector (390), wherein the reflector (390) has a reflective surface (392) facing the light path zone (346), wherein the reflective surface (392) is arranged with an acute angle in relation to the central axis (348) and with a vertex above the bottom portion (342), wherein the diffuser element (340) comprises a ledge (349), wherein the ledge (349) is protruding from the sidewall portion (343), and wherein the light path zone (346) is arranged between the ledge (349) and the bottom portion (342), **characterised in that** the free space (344) is outlined by the sidewall portion (343), the ledge (349), and the reflector (390).

2. A tubular skylight (100) according to claim 1, **characterized in that** the sidewall portion (343) has a substantially planar cross section in a plane extending radially from the central axis (348).

3. A tubular skylight (100) according to claim 1 or 2, **characterized in that** the sidewall portion (343) is inclined between 25° to -10° in relation to the central axis (348).

4. A tubular skylight (100) according to any of the preceding claims, **characterized in that** the diffuser element (340) comprise a second diffuser pane (345) and a spacer element to space the second diffuser pane (345) from the first diffuser pane (341) and provide a closed air space between the first and second diffuser panes (341, 345).

5. A tubular skylight (100) according to any of the preceding claims, **characterized in that** the diffuser element (340) is circular, that an external thread (350) is formed on the sidewall portion (343) and that a cooperating internal thread (308) is formed in the ceiling mounted element (300).

6. A tubular skylight (100) according to any of the preceding claims, **characterized in that** the light path zone (346) is more translucent than the bottom portion (342).

## Patentansprüche

1. Rohrförmiges Oberlicht (100), umfassend;
- ein dachmontiertes Element (200), um Außenlicht zu sammeln,
- ein deckenmontiertes Element (300),
- ein Rohr (400), das das Dachelement (200) und das Deckenelement (300) verbindet, und
- ein Diffusorelement (340), um das Außenlicht in einem Raum zu verteilen, wobei das Diffusorelement (340) in dem deckenmontierten Element (300) montiert ist, wobei das Diffusorelement (340) eine erste Diffusorscheibe (341) mit einem lichtdurchlässigen Bodenabschnitt (342) und einem Seitenwandabschnitt (343) mit einer lichtdurchlässigen Lichtwegzone (346) umfasst, wobei das röhrenförmige Oberlicht (100) Mittel aufweist, die konfiguriert sind, um die Leuchtdichte des aus dem Diffusor austretenden Lichts so zu beeinflussen, dass die Leuchtdichte des durch die Lichtwegzone (346) austretenden Lichts eine andere Leuchtdichte aufweist als das durch den Bodenabschnitt (342) austretende Licht, wobei der Bodenabschnitt (342) im Wesentlichen plan ist mit einem Breite-zu-Höhen-Verhältnis von mehr als 6, wobei der Bodenabschnitt (342) an den Seitenwandabschnitt (343) an einer Übergangslinie (347) angrenzt, wobei der Seitenwandabschnitt (343) im Wesentlichen parallel zu einer Mittelachse (348) durch das Diffusorelement (340) ist, und wobei das deckenmontierte Element (300) und das Diffusorelement (340) konfiguriert sind, um einen Lichtdurchgang von der Lichtwegzone (346) zum Raum in Form eines Freiraums (344) angrenzend an die Lichtwegzone (346) bereitzustellen, wobei das röhrenförmige Oberlicht (100) einen Reflektor (390) umfasst, wobei der Reflektor (390) eine reflektierende Oberfläche (392) aufweist, die der Lichtwegzone (346) zugewandt ist, und wobei die reflektierende Oberfläche (392) mit einem spitzen Winkel in Bezug auf die Mittelachse (348) und mit einem Scheitelpunkt über dem Bodenabschnitt (342) angeordnet ist, wobei das Diffusorelement (340) eine Leiste (349) umfasst, wobei die Leiste (349) aus dem Seitenwandabschnitt (343) herausragt, und wobei die Lichtwegzone (346) zwischen der Leiste (349) und dem Bodenabschnitt (342) angeordnet ist, **dadurch gekennzeichnet, dass** der Freiraum (344) durch den Seitenwandabschnitt (343), die Leiste (349) und den Reflektor (390) begrenzt ist.

2. Rohrförmiges Oberlicht (100) nach Anspruch 1, **dadurch gekennzeichnet, dass** der Seitenwandabschnitt (343) einen im Wesentlichen ebenen Querschnitt in einer Ebene aufweist, die sich radial von der Mittelachse (348) erstreckt.

3. Rohrförmiges Oberlicht (100) nach Anspruch 1 oder 2, **dadurch gekennzeichnet, dass** der Seitenwandabschnitt (343) zwischen 25° und -10° in Bezug auf die Mittelachse (348) geneigt ist.

4. Rohrförmiges Oberlicht (100) nach einem der vorstehenden Ansprüche, **dadurch gekennzeichnet, dass** das Diffusorelement (340) eine zweite Diffusorscheibe (345) und ein Abstandhalterelement umfasst, um die zweite Diffusorscheibe (345) von der ersten Diffusorscheibe (341) zu beabstanden und einen geschlossenen Luftraum zwischen der ersten und zweiten Diffusorscheibe (341, 345) bereitzustellen.

5. Rohrförmiges Oberlicht (100) nach einem der vorstehenden Ansprüche, **dadurch gekennzeichnet, dass** das Diffusorelement (340) kreisförmig ist, dass an dem Seitenwandabschnitt (343) ein Außengewinde (350) ausgebildet ist und dass in dem deckenmontierten Element (300) ein zusammenwirkendes Innengewinde (308) ausgebildet ist.

6. Rohrförmiges Oberlicht (100) nach einem der vorhergehenden Ansprüche, **dadurch gekennzeichnet, dass** die Lichtwegzone (346) lichtdurchlässiger ist als der Bodenabschnitt (342).

## Revendications

1. Puits de lumière tubulaire (100) comprenant :
- un élément monté sur le toit (200) pour collecter la lumière extérieure,
- un élément monté au plafond (300),
- un tube (400) reliant l'élément monté sur le toit (200) et l'élément monté au plafond (300), et
- un élément diffuseur (340), pour répartir la lumière extérieure dans une pièce, dans lequel l'élément diffuseur (340) est monté dans l'élément monté au plafond (300), dans lequel l'élément diffuseur (340) comprend un premier panneau de diffusion (341) avec une partie inférieure translucide (342) et une partie de paroi latérale (343) avec une zone de trajet de lumière translucide (346), dans lequel le puits de lumière tubulaire (100) a des moyens configurés pour affecter la luminance de la lumière sortant du diffuseur de sorte que la luminance de la lumière sortant par la zone de trajet de lumière (346) a une luminance différente de celle de la lumière sortant de la partie inférieure (342), dans lequel la partie inférieure (342) est sensiblement plane et présente un rapport largeur sur hauteur supérieur à 6, dans lequel la partie inférieure (342) est adjacente à la partie de paroi latérale (343) au niveau d'une ligne de transition (347), dans lequel la partie de paroi latérale (343) est sensiblement parallèle à un axe central (348) à travers l'élément diffuseur (340), dans lequel l'élément monté au plafond (300) et l'élément diffuseur (340) sont configurés pour fournir un passage de lumière de la zone de trajet de lumière (346) à la pièce sous la forme d'un espace libre (344) adjacent à la zone de trajet de lumière (346), dans lequel le puits de lumière tubulaire (100) comprend un réflecteur (390), dans lequel le réflecteur (390) a une surface réfléchissante (392) faisant face à la zone de trajet de lumière (346), dans lequel la surface réfléchissante (392) est agencée avec un angle aigu par rapport à l'axe central (348) et avec un sommet au-dessus de la partie inférieure (342), dans lequel l'élément de diffusion (340) comprend un rebord (349), le rebord (349) faisant saillie de la partie de paroi latérale (343) et dans lequel la zone de trajet de lumière (346) est agencée entre le rebord (349) et la partie inférieure (342), **caractérisé en ce que** l'espace libre (344) est délimité par la partie de paroi latérale (343), le rebord (349) et le réflecteur (390).

2. Puits de lumière tubulaire (100) selon la revendication 1, **caractérisé en ce que** la partie de paroi latérale (343) a une section transversale sensiblement plane dans un plan s'étendant radialement à partir de l'axe central (348).

3. Puits de lumière tubulaire (100) selon la revendication 1 ou 2, **caractérisé en ce que** la partie de paroi latérale (343) est inclinée entre 25° et -10° par rapport à l'axe central (348).

4. Puits de lumière tubulaire (100) selon l'une quelconque des revendications précédentes, **caractérisé en ce que** l'élément diffuseur (340) comprend un second panneau de diffuseur (345) et un élément d'espacement pour espacer le second panneau de diffuseur (345) du premier panneau de diffuseur (341) et créent un espace d'air clos entre les premier et second panneau de diffuseur (341, 345).

5. Puits de lumière tubulaire (100) selon l'une quelconque des revendications précédentes, **caractérisé en ce que** l'élément diffuseur (340) est circulaire, **en ce qu'**un filetage externe (350) est formé sur la partie de paroi latérale (343) et **en ce qu'**un filetage interne coopérant (308) est formé dans l'élément monté au plafond (300).

6. Puits de lumière tubulaire (100) selon l'une quelconque des revendications précédentes, **caractérisé en ce que** la zone de trajet de lumière (346) est plus translucide que la partie inférieure (342).
